**Europäisches Patentamt**

**European Patent Office**

**Office européen des brevets**

(11) Publication number: **0 160 964**
**B1**

## (12) EUROPEAN PATENT SPECIFICATION

(45) Date of publication of patent specification: **16.05.90**  (51) Int. Cl.⁵: **C 01 B 13/11**

(21) Application number: **85105568.1**

(22) Date of filing: **07.05.85**

---

(54) **Method for producing an ozone gas and apparatus for producing the same.**

---

(30) Priority: **09.05.84 JP 92464/84**

(43) Date of publication of application:
**13.11.85 Bulletin 85/46**

(45) Publication of the grant of the patent:
**16.05.90 Bulletin 90/20**

(84) Designated Contracting States:
**DE FR GB**

(56) References cited:
**EP-A- 121 235**
**FR-A-2 543 529**
**US-A-2 704 274**
**US-A-3 884 819**

(73) Proprietor: **Masuda, Senichi, Prof.**
**3-2-1-415, Nishigahara Kita-ku**
**Tokyo-to (JP)**
(73) Proprietor: **NGK Spark Plug Co. Ltd.**
**No. 14-18, Takatsuji-cho Mizuho-ku**
**Nagoya-shi Aichi-ken 467 (JP)**

(72) Inventor: **Masuda, Senichi, Prof.**
**3-2-1-415 Nishigahara Kita-ku**
**Tokyo (JP)**

(74) Representative: **Tetzner, Volkmar, Dr.-Ing. Dr. jur.**
**Van-Gogh-Strasse 3**
**D-8000 München 71 (DE)**

Courier Press, Leamington Spa, England.

## Description

The invention relates to an ozonizer according to the preamble of the claim.

An ozonizer according to the preamble of the claim is known from US—A—2 704 274. With this known apparatus liquid oxygen enters a boiler and is brought into a gaseous state at a pressure of 100 lbs/sq in. The compressed oxygen expands through an engine into an ozone generator which is cooled by refrigerant at −50°C and which operates on the corona discharge principle. Liquid ozone condenses out.

US—A—3 884 819 describes an ozonizer comprising pairs of electrodes separated by insulating tubes made of dielectric material like glass. Cooled pressurised oxygen containing gas is treated in this ozonizer.

It is the object of the invention to improve an ozonizer according to the preamble of the claim such that a very intensive corona discharge is produced and simultaneously an efficient cooling is obtained.

This object is solved by the characterising features of the claim.

Two embodiments of the invention are shown in the drawing, wherein

Fig. 1 is a longitudinal cross-section of a first embodiment,

Fig. 2 is a transverse cross-section along line II—II of fig. 1,

Fig. 3 is a longitudinal cross-section of a second embodiment.

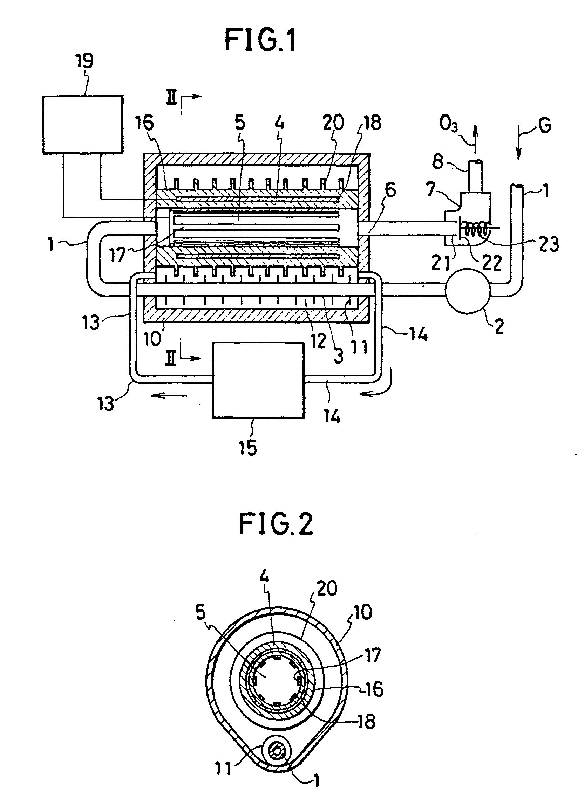

With the embodiment shown in fig. 1 and 2 a gas G to be ozonized is fed from a feed pipe 1 through a pressurizing pump 2 and a cooling device 3 into a corona discharge region 5 of a corona discharge device 4. The gas supplied to the corona discharge device 4, therefore, has a greater density than its density at normal temperature and pressure.

The gaseous ozone (O₃) produced in the corona discharge 4 is delivered through an outlet 6, a pressure regulating device 7 and an ozone gas pipe 8.

In the cooling device 3, the cooling fins are provided on the outer periphery of the feed pipe 1, the cooling fins being cooled by a refrigerant 12 which circulates through a heat insulated casing 10.

The refrigerant 12 is cooled by a refrigerator 15, supplied to the casing 10 through an inlet pipe 13 and returned to the refrigerator 15 through an outlet pipe 14.

In the corona discharge device 4 a plurality of interconnected parallel linear electrode elements 17 are provided on the inner surface of a cylinder 16 made of dielectric material, as alumina ceramic or glass. A cylindrical outer electrode 18 is provided within the thickness of the cylinder 16. A high frequency high voltage power supply 19 is connected to the outer electrode 18 and the interconnected inner electrode elements 17 to generate a corona discharge along the inner surface of the cylinder 16.

Cooling fins 20 are provided on the outer surface of the cylinder 16. The electrode elements 17 and the corona generating region 5 are cooled by these cooling fins 20 which are cooled by the refrigerant 12.

In the pressure regulating device 7 a valve 22 is normally held in pressure contract with a valve seat 21 by a coil spring 23. When the pressure of the gaseous ozone within the corona discharge device 4 exceeds a predetermined pressure valve 22 opens against the force of the coil spring 23 so that the gaseous ozone is exhausted. The pressure in the corona generating region 5, therefore, always is held at or below a predetermined pressure.

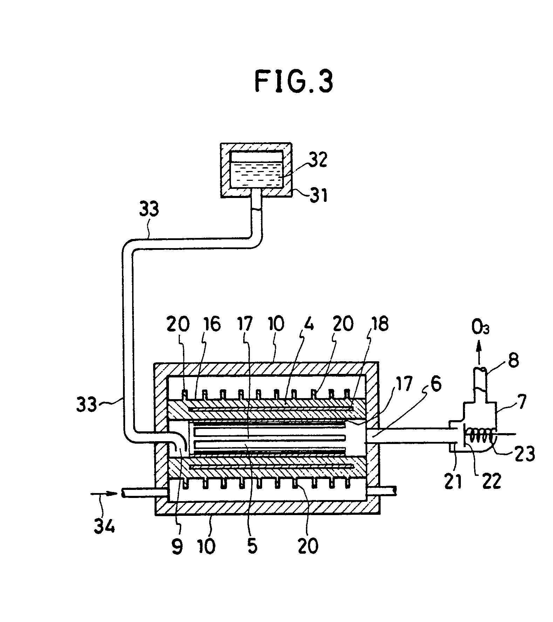

With the embodiment shown in fig. 3 liquid oxygen 32 is directly supplied from a tank 31 through a pipe 33 to the inlet 9 of the corona discharge device 4. The liquid oxygen 32 which is dropped into the corona discharge device 4 is evaporated within this device 4. The corona discharge device 4 is cooled by the latent heat of evaporation.

A coolant medium 34, such as liquid nitrogen, can be supplied into the casing 10 to cool the cooling fins 20 provided on the outer surface of the cylinder 16.

Instead of feeding the liquid oxygen 32 directly into the corona discharge device 4 it could be passed through the casing 10 or could be dropped onto the outer surface of the cylinder 16 of the corona discharge device 4 within the casing 10 to cool the cooling fins 20. At the same time the liquid oxygen 32 could be evaporated there to be supplied to the corona discharge device 4.

As a matter of course, liquid air could be used instead of liquid oxygen.

## Claim

Ozonizer comprising

a) a corona discharge device (4) in which a dielectric material is provided between a pair of electrodes to which a high frequency high voltage is applied,

b) means for supplying a gas to be ozonized to said corona discharge device (4), said gas having a greater density than its density at normal temperature and pressure, characterised by the following features:

c) the dielectric material is formed by a cylinder (16) comprising an inner electrode on its inner surface and an outer electrode within the thickness of said cylinder,

d) said inner electrode is in contact with the gas to be ozonized comprising a plurality of interconnected parallel linear electrode elements (17), whereas said outer electrode (18) is cylindrical,

e) cooling fins (20) are provided on the outer surface of said cylinder (16).

## Patentanspruch

Ozonisiergerät, enthaltend

a) eine Einrichtung (4) zur Korona-Entladung, in der ein dielektrisches Material zwischen zwei Elektroden vorgesehen ist, an die eine hochfrequente Hochspannung angelegt wird,

b) Einrichtungen zur Zuführung eines zu ozonisierenden Gases zu der Einrichtung (4) zur Korona-Entladung, wobei dieses Gas eine größere Dichte als die Dichte bei Normaltemperatur und -druck aufweist, gekennzeichnet durch folgende Merkmale:

c) das dielektrische Material wird durch einen Zylinder (16) gebildet, der an seiner inneren Oberfläche eine innere Elektrode und innerhalb der Wandstärke des Zylinders eine äußere Elektrode enthält,

d) wobei sich die innere Elektrode in Berührung mit dem zu ozonisierenden Gas befindet und eine Anzahl von miteinander verbundenen parallelen linearen Elektrodenelementen (17) enthält, während die äußere Elektrode (18) zylindrisch ausgebildet ist,

e) und wobei Kühlrippen (20) an der äußeren Oberfläche des Zylinders (16) vorgesehen sind.

**Revendication**

Ozoniseur comprenant:

a) un appareillage de décharge à effluves (45) dans lequel une matière isolante est disposée entre deux électrodes reçoivent une haute tension à fréquence élevée,

b) des organes d'alimentation dudit appareillage de décharge à effluves (4) en gaz devant être ozonisé, ce gaz ayant une densité plus élevée que celle qu'il possède à température et pression normales, caractérisé par les particularités suivantes:

c) la matière isolante est formée d'un cylindre (16) comportant une électrode interne sur la surface intérieure et une électrode extérieure situé dans son épaisseur,

d) ladite électrode interne est en contact avec le gaz devant être ozonisé et se compose de plusieurs éléments linéaires, parallèles et interconnectés (17), tandis que ladite électrode extérieure (18) est cylindrique,

e) la surface extérieure dudit cylindre (16) comporte des nervures de refroidissement (20).

# FIG.1

# FIG.2

# FIG.3